**Europäisches Patentamt**

**European Patent Office**

**Office européen des brevets**

(19)

(11) Veröffentlichungsnummer : **0 412 372 B1**

## (12) EUROPÄISCHE PATENTSCHRIFT

(45) Veröffentlichungstag der Patentschrift :
**30.12.92 Patentblatt 92/53**

(51) Int. Cl.$^5$ : **B60K 17/22**, F16D 9/00,
F16C 3/02

(21) Anmeldenummer : **90114430.3**

(22) Anmeldetag : **27.07.90**

(54) Antriebsvorrichtung für Kraftfahrzeuge.

(30) Priorität : **10.08.89 DE 3926427**

(43) Veröffentlichungstag der Anmeldung :
**13.02.91 Patentblatt 91/07**

(45) Bekanntmachung des Hinweises auf die
Patenterteilung :
**30.12.92 Patentblatt 92/53**

(84) Benannte Vertragsstaaten :
**DE ES FR GB IT**

(56) Entgegenhaltungen :
EP-A- 0 019 585
DE-A- 2 156 783
DE-B- 1 231 494
FR-A- 2 348 393
GB-A- 2 200 488

(73) Patentinhaber : **AUDI AG**
**Auto-Union-Strasse 1 Postfach 220**
**W-8070 Ingolstadt (DE)**

(72) Erfinder : **Reim, Herwig**
**Lindelweg 23**
**W-8079 Buxheim (DE)**
Erfinder : **Naumann, Fritz, Dr.**
**Jahnstrasse 29**
**W-8071 Stammham (DE)**
Erfinder : **Haldenwanger, Hans-Günther**
**Behaimstrasse 16 a**
**W-8070 Ingolstadt (DE)**

EP 0 412 372 B1

Jouve, 18, rue Saint-Denis, 75001 PARIS

**Beschreibung**

Die Erfindung betrifft eine Antriebsvorrichtung für Kraftfahrzeuge, insbesondere für Pkw, gem. dem Oberbegriff des Patentanspruches 1.

Bei Kraftfahrzeugen, insbesondere bei Pkw's, sind die Karosserie, die Anordnung der Antriebsaggregate und die Sicherheitseinrichtungen (Sicherheitsgurte, Air-bag etc.) so ausgelegt, daß beispielsweise bei Frontalcrash's gewisse Beschleunigungswerte im Millisekundenbereich auf die Insassen nicht überschritten werden. Hinsichtlich der Antriebsvorrichtung ist es dazu bekannt (DE 2156783A1), die vom Antriebsaggregat im Frontbereich nach hinten zum Differential bzw. Heckbereich führende Kardanwelle mit einem Verformungsglied auszubilden, um damit ebenfalls Aufprallenergie zu vernichten bzw. abzubauen. Da die Kardanwelle aber jedenfalls ein maximales Torsionsmoment übertragen muß und der Verformbarkeit auch durch die erforderliche Biegefestigkeit und -steifigkeit (Eigenfrequenz) Grenzen gesetzt sind, können immer noch relativ hohe dynamische Axialkräfte übertragen werden, die sich nachteilig auf die Beschleunigungswerte bei einem Crash auswirken können. Dies gilt auch für aus Faserverbundwerkstoff hergestellte Kardanwellen, wie sie beispielsweise die EP 19585A1 vorgibt.

Aufgabe der Erfindung ist es, die gattungsgemäße Antriebsvorrichtung so auszubilden, daß bei Aufrechterhaltung einer robusten, betriebssicheren Konstruktion der Einfluß auf die Beschleunigungswerte bei Crash's vermindert ist.

Diese Aufgabe wird erfindungsgemäß mit den kennzeichnenden Merkmalen des Patentanspruches 1 oder des Patentanspruches 3 gelöst. Vorteilhafte Weiterbildungen der Erfindung sind den übrigen Patentansprüchen entnehmbar.

Es wird also vorgeschlagen, die Kardanwelle so auszubilden, daß bei Auftreten einer definierten dynamischen Axialkraft und ohne vorhergehende größere plastisch Verformung eine Zerstörung der Kardanwelle mit einer zu Null werdenden Axialkraft $F_a$ bewirkt ist. Die noch übertragbare Axialkraft kann beispielsweise auf einen Wert festgelegt werden, der bei einem Frontalcrash mit einer Geschwindigkeit des Kraftfahrzeuges von 15 km/h auftritt, bei höheren Axialkräften wird die Kardanwelle zerstört und muß bei der Reparatur des Kraftfahrzeuges mit erneuert werden.

Mit dem erfindungsgemäßen Vorschlag wird somit erreicht, daß bei einem Crash mit entsprechender Verformung der Front- oder Heckpartie des Kraftfahrzeuges, verbunden mit einer Verschiebung des Antriebsaggregates oder der Hinterachse, schlagartig die dynamische Axialkraftübertragung der Kardanwelle unterbunden ist, wodurch der Verformungswiderstand der Frontpartie verringert und damit die auf die Insassen wirkenden Beschleunigungswerte reduziert werden.

Gem. den Merkmalen der Patentansprüche 1 und 2 kann in die Kardanwelle aus Faserverbundwerkstoff ein Sprengsatz eingebunden sein, der bei Auftreten der definierten Axialkraft gezündet wird. Besonders vorteilhaft kann diese Zündung beispielsweise mit der Zündung eines Airbags als passiven Insassenschutz gleichgeschaltet sein. Diese Lösung hat den Vorteil, daß hinsichtlich der Auslegung der Kardanwelle auf das zu übertragende maximale Torsionsmoment und deren Biegesteifigkeit keinerlei konstruktive Zwänge bestehen und tatsächlich im Millisekundenbereich die Zerstörung der Kardanwelle erreichbar ist. Der Sprengsatz kann beispielsweise innerhalb der Kardanwelle angeordnet oder aber bei deren Herstellung unmittelbar in diese eingebunden bzw. eingewickelt werden.

Alternativ wird gem. den Merkmalen des Patentanspruches 3 vorgeschlagen, die Kardanwelle aus Faserverbundwerkstoff konstruktiv so auszubilden, daß das Verhältnis zwischen dem statisch übertragbaren Torsionsmoment und der axial gerichteten dynamischen Bruchkraft zwischen 10 bis 12,5 beträgt, wobei das Torsionsmoment in Nm und die Bruchkraft in KN anzusetzen sind.

Untersuchungen und Berechnungen haben gezeigt, daß bei einer derartigen Auslegung einer Kardanwelle aus Faserverbundwerkstoff sowohl das maximal auftretende Torsionsmoment (Sollvorgabe) übertragbar ist und trotzdem bei einer definierten dynamischen Axialkraft eine Zerstörung auftritt. Die dynamische Axialkraft liegt bei dieser Auslegung so, daß sowohl die maximale Bauteilebelastung unter klimatischen Verhältnissen und über deren gesamte, geforderte Lebensdauer sichergestellt als auch eine deutliche Verringerung der Insassen-Beschleunigungswerte im Crashfall durch Zerstörung der Kardanwelle bzw. schlagartigen Abbau der dynamischen Axialkraft gegen Null erzielt ist. Ferner ist sichergestellt, daß bei einem Crash unterhalb einer definierten Geschwindigkeit (z.B. unterhalb 15 km/h) keine Schädigung der Kardanwelle auftritt.

Bevorzugt wird gem. den Merkmalen der Patentansprüche 5 bis 7 vorgeschlagen, hochzugfeste Kohlefasern bei einem Faserwickelwinkel $\alpha$ von $\pm$ 15° bis 20° zu verwenden und bei einem Innendurchmesser $d_i$ der Kardanwelle von ca. 70 mm das Verhältnis von $d_i$ zur Wandstärke s von 22 bis 32 auszulegen. Diese Werte haben sich insbesondere für Fahrzeuge der B-, C- und D-Klasse mit einem Gesamtgewicht zwischen 1,5 t und 2,5 t als vorteilhaft erwiesen.

Aus Kostengründen und/oder aufgrund weiterer konstruktiver Zwänge kann es zweckmäßig sein, gemäß Patentanspruch 8 nur einen Abschnitt oder bei einer mehrteiligen Kardanwelle nur einen Teil aus Faserverbundwerkstoff auszubilden, wobei der Teil oder Abschnitt logischerweise dem frontseitigen Antriebsaggregat unmittelbar benachbart ist.

Zwei Ausführungsbeispiele der Erfindung sind im folgenden mit weiteren Einzelheiten näher erläutert. Die schematische Zeichnung zeigt in

Fig. 1 eine Antriebsvorrichtung für einen Personenkraftwagen mit einem Antriebsaggregat, einer Kardanwelle und einem hinteren Differential;

Fig. 2 einen Längsmittelschnitt durch eine Kardanwelle aus Faserverbundwerkstoff mit einem integrierten Sprengsatz; und

Fig. 3 einen weiteren Längsmittelschnitt durch eine Kardanwelle aus in Epoxidharz eingebetteten, gewickelten Kohlefasern.

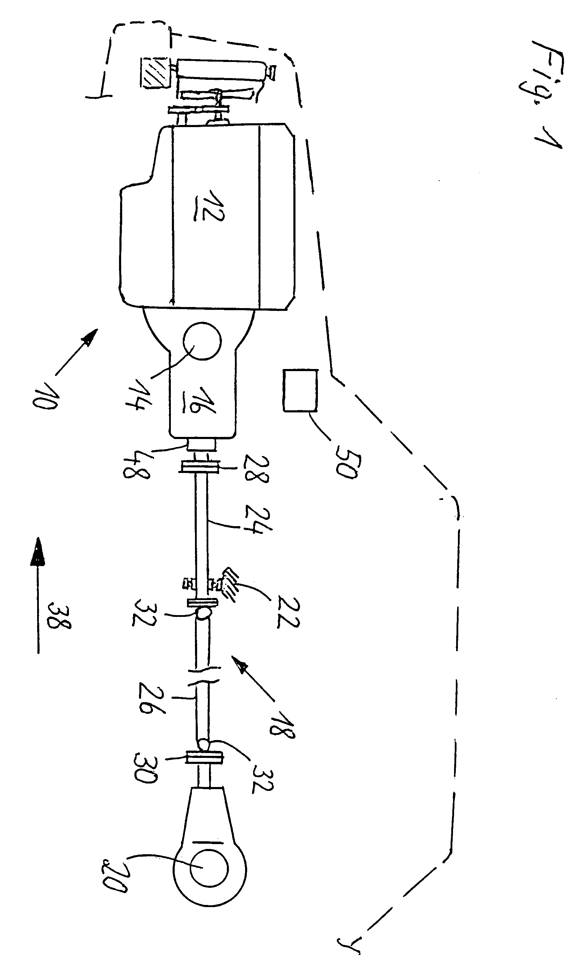

Die Fig. 1 zeigt eine Antriebsvorrichtung in einem Personenkraftwagen (Pkw) mit einem Antriebsaggregat 10, welches sich aus einer Brennkraftmaschine 12, einem vorderen Differential 14 zum Antrieb der vorderen Räder und einem Geschwindigkeitswechselgetriebe 16 zusammensetzt. Über eine Kardanwelle 18 und ein hinteres Differential 20 werden die hinteren Räder des Pkw angetrieben.

Das Antriebsaggregat 10, die Kardanwelle 18 bei 22 und das hintere Differential 20 sind an der Karosserie des Pkw in nicht näher dargestellter Weise schwingungsisoliert aufgehängt bzw. gelagert.

Die Kardanwelle 18 setzt sich aus einer vorderen Kardanwelle 24 und einer hinteren Kardanwelle 26 zusammen und weist zwei Anschlußflansche 28, 30 und eine Gelenkverbindung 32 auf. Während die hintere Kardanwelle 26 sowie die Anschlußflansche und die Gelenkverbindung herkömmlich aus Stahl gefertigt sind, besteht die vordere Kardanwelle 24 aus einer Epoxidharz-Matrix, in der Glasfasern in einen Wickelwinkel von +/- 20° eingebettet sind.

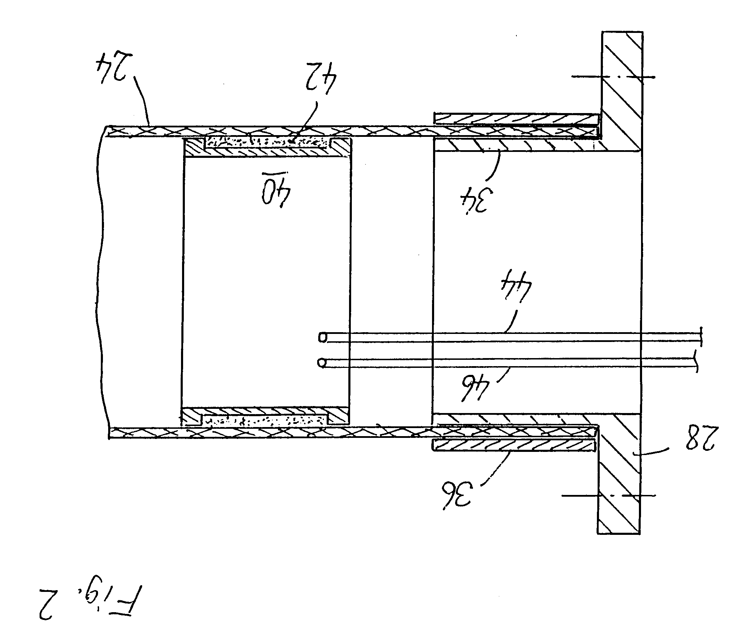

Wie die Fig. 2 zeigt, kann die Verbindung zwischen dem Anschlußflansch 28 und der rohrförmigen Kardanwelle 24 durch Einpressen des freien Halses 34 erfolgen, wobei ein äußerer Stahlring 36 die auf die Kardanwelle 24 wirkenden Umfangskräfte abstützt.

In Fahrtrichtung (Pfeil 38) des Pkw hinter dem Anschlußflansch 28 ist in die Kardanwelle 24 ein im Querschnitt U-förmiger Stahlring 40 eingeklebt, in dessen vom Innenumfang der Kardanwelle 24 begrenztem Ringraum ein Sprengpulver 42 eingelagert ist. Der Sprengsatz 40, 42 kann über elektrische Leitungen 44, 46 gezündet werden und ist hinsichtlich seiner Sprengwirkung so ausgelegt, daß im Falle seiner Zündung die Kardanwelle 24 im unmittelbaren Umfangsbereich zerstört wird.

Die Leitungen 44, 46 sind über eine am Ausgang des Wechselgetriebes 16 angeordnete Schleifkontakteinrichtung 48 und über nicht dargestellte elektrische Leitungen mit einem Steuergerät 50 verbunden, welches über nicht dargestellte Aufprallsensoren die Zündung eines ebenfalls nicht dargestellten Air-bags als passive Sicherheitseinrichtung des Pkw steuert. Das Steuergerät 50 ist dabei so ausgelegt, daß mit der Zündung (Aufblasen) des Air-bags auch der Sprengsatz 40, 42 gezündet und damit gleichzeitig die Kardanwelle 24 zerstört wird.

Bei einer Verlagerung des Antriebsaggregates 10 z. B. bei einem Frontalcrash nach hinten kann somit über die Kardanwelle 24 keine Axialkraft mehr abgestützt werden. Dies bewirkt eine Verringerung des Verformungswiderstandes der Frontpartie des Kraftfahrzeuges und damit verbunden eine Reduzierung der auf die Fahrzeuginsassen wirkenden Beschleunigungswerte.

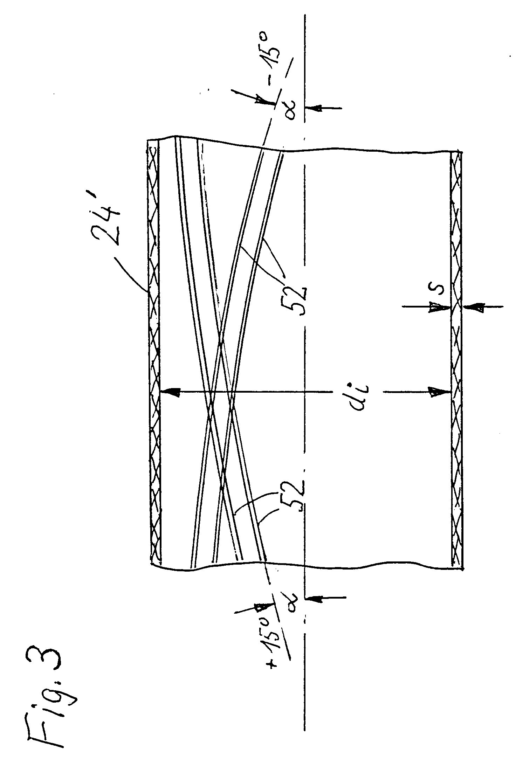

Die Fig. 3 zeigt einen Abschnitt einer Kardanwelle 24', die über den nachstehend erläuterten Umfang hinaus ähnlich der in Fig. 1 und 2 gezeigten Kardanwelle 24 aufgebaut sein kann.

Die Kardanwelle 24' besteht aus einer Epoxidharz-Matrix, in die hochzugfeste (HT-Güte) Kohlefasern 52 in einem Wickelwinkel $\alpha$ zur Längsachse der Kardanwelle 24' von +/- 15° eingebettet sind. Der Innendurchmesser $d_i$ beträgt 70 mm und die Wandstärke s 2,5 mm. Damit beträgt das Verhältnis $d_i$ zu s = 28.

Die Kardanwelle 24' ist ausgelegt auf ein statisches Bruch-Trosionsmoment

$$\text{Soll } MD_{T \text{ stat. Bruch}}$$

von 2.000 Nm und auf eine Bruchgrenzen-Axialbelastung dynamisch (Stoßzeit etwa 1 ms) von

$$\text{Soll } F_{a \text{ dyn. Bruch}}$$

= 180 KN, woraus sich ein Verhältnis von etwa 11 ergibt.

Diese nur ein Ausführungsbeispiel darstellende Kardanwelle 24' überträgt das geforderte maximale Torsionsmoment $Md_T$ im statischen und dynamischen Bereich unter Berücksichtigung der möglichen klimatischen Verhältnisse bei Pkw (Temperatur, Luftfeuchtigkeit etc.), hält den üblichen Mißbräuchen (Frontalcrash < 15 km/h) stand, weist noch eine zufriedenstellende Biegesteifigkeit (Eigenfrequenz) auf und erfüllt insbesondere für in Pkw mit einem Gesamtgewicht von ca. 1.800 kg (Masse!) die Forderung, daß ab der definierten dynamischen Axialkraft eine Zerstörung auftritt, die die Axialstützkraft (Reaktionskraft) schlagartig gegen Null abbaut.

Es versteht sich, daß bei höheren oder niedrigeren zu übertragenden Torsionsmomenten andere Materialen (Glasfaser, Aramidfaser etc.), andere Wickelwinkel und ggf. ein anderes $d_i$ zu s Verhältnis wählbar sind; entscheidend ist dabei das Verhältnis

$$\frac{\text{Soll } Md_{T \text{ stat. Bruch}}}{\text{Soll } F_{a \text{ dyn. Bruch}}} = 10 \div 12{,}5 \left[\frac{N_4}{KN'}\right]$$

welches wie vorstehend ausgeführt die Torsionsbelastung einerseits und die axiale Stoßnachgiebigkeit andererseits derart definiert, daß bei ausreichender Dauerbetriebssicherheit der Antriebsvorrichtung eine Reduzierung der Beschleunigungswerte der Insassen beim Crash des Pkw erzielt wird. Anstelle der mehrteiligen Kardanwelle 18 kann auch eine einteilig durchgehende Kardanwelle aus Faserverbundwerkstoff verwendet sein.

## Patentansprüche

1. Antriebsvorrichtung für Kraftfahrzeuge, insbesondere Pkw, mit einem frontseitigen Antriebsaggregat, zumindest einem heckseitig die Räder antreibenden Differential und einer zwischen Antriebsaggregat und Differential angeordneten, rohrförmigen Kardanwelle aus Faserverbundwerkstoff, **dadurch gekennzeichnet,** daß in einem definierten Abschnitt der Kardanwelle (24) ein Sprengsatz (40,42) vorgesehen ist, der bei Auftreten einer definierten Axialkraft $F_a$ gezündet wird und ohne vorhergehende größere plastische Verformung eine Zerstörung der Kardanwelle (24) bewirkt.

2. Antriebsvorrichtung nach Anspruch 1, **dadurch gekennzeichnet,** daß bei einem Pkw mit einem passiven Insassenschutz, insbesondere einem Air-bag, der Sprensatz (40,42) gleichzeitig mit dem Air-bag gezündet wird.

3. Antriebsvorrichtung für Kraftfahrzeuge, insbesondere Pkw, mit einem frontseitigen Antriebsaggregat, zumindest einem heckseitig die Räder antreibenden Differential und einer zwischen Antriebsaggregat und Differential angeordneten, rohrförmigen Kardanwelle aus Faserverbundwerkstoff, **dadurch gekennzeichnet,** daß zugfeste Fasern (52) der Kardanwelle (24') in einem definierten Wickelwinkel $\alpha$ in einer Kunstharz-Matrix verarbeitet sind und daß die Kardanwelle (24') hinsichtlich deren Innendurchmesser $d_i$, Wandstärke s, Wickelwinkel $\alpha$ und Material konstruktiv so ausgelegt ist, daß das Verhältnis

$$\frac{\text{Soll } Md_T \text{ stat.Bruch}}{\text{Soll } F_a \text{ dyn. Bruch}} = 10 \text{ bis } 12{,}5$$

beträgt, wobei Soll $Md_t$ das maximal statisch übertragbare Torsionsmoment der Kardanwelle und Soll $F_a$ dynamisch Bruch die axial gerichtete Kraft in Millisekundenbereich ist, bei der die Kardanwelle (24') bricht bzw. zerstört wird.

4. Antriebsvorrichtung nach Anspruch 3, **dadurch gekennzeichnet,** daß die Kardanwelle (24') aus in Epoxidharz eingebetteten Kohlefasern (52) hergestellt ist.

5. Antriebsvorrichtung nach den Ansprüchen 3 und 4, **dadurch gekennzeichnet,** daß der Wickelwinkel $\alpha \pm$ 10° bis 30°, insbesondere 15° bis 20° beträgt.

6. Antriebsvorrichtung nach den Ansprüchen 3 bis 5, **dadurch gekennzeichnet,** daß das Verhältnis $d_i$ zu s bei einem Innendurchmesser von ca. 70 mm zwischen 22 und 32 beträgt.

7. Antriebsvorrichtung nach einem oder mehreren der vorhergehenden Ansprüche, **dadurch gekennzeichnet,** daß nur ein Abschnitt (24) der Kardanwelle (18) aus Faserverbundwerkstoff hergestellt ist und mit der restlichen Kardanwelle (26) aus Stahl gelenkig oder starr verbunden ist.

## Claims

1. Drive mechanism for motor vehicles, more particularly passenger cars, comprising a front drive assembly, at least one rear differential to drive the wheels, and a tubular, fibre composite cardan shaft disposed between the drive assembly and the differential,
characterised by the provision of a bursting charge (40, 42) in a defined section of the cardan shaft (24), said charge being ignited in the event that a defined axial force $F_a$ occurs and effecting destruction of the cardan shaft (24) without previous major plastic deformation.

2. Drive mechanism according to claim 1, characterised in that in the case of a passenger car with a passive occupant protection device, more particularly an airbag, the bursting charge (40, 42) is ignited simutaneously with the airbag.

3. Drive mechanism for motor vehicles, more particularly passenger cars, comprising a front drive assembly, at least one rear differential to drive the wheels, and a tubular, fibre composite cardan shaft disposed between the drive assembly and the differential,
characterised in that fibres (52) strong in tension from the cardan shaft (24') are worked at a defined winding angle $\alpha$ in a synthetic resin matrix and that the cardan shaft (24') is so designed in terms of its internal diameter $d_i$, thickness s, winding angle $\alpha$ and material that the following ratio applies:

$$\frac{\text{Nominal Md}_T \text{ static rupture}}{\text{Nominal F}_a \text{ dynamic rupture}} = 10 \text{ to } 12.5$$

   where nominal $Md_t$ is the maximum statically transmissible torsional moment of the cardan shaft and nominal $F_a$ dynamic rupture the axially directed force in the millisecond range at which the cardan shaft (24') ruptures, or is destroyed.

4. Drive mechanism according to claim 1, characterised in that the cardan shaft (24') is manufactured from carbon fibres (52) embedded in epoxy resin.

5. Drive mechanism according to claims 3 and 4, characterised in that the winding angle $\alpha$ is $\pm 10°$ to $30°$, more particularly $15°$ to $20°$.

6. Drive mechanism according to claims 3 to 5, characterised in that for an internal diameter of approx. 70 mm the ratio $d_i$ to s is between 22 and 32.

7. Drive mechanism according to one or more of the preceding claims, characterised in that only one section (24) of the cardan shaft (18) is manufactured from fibre composite and is flexibly or rigidly joined to the rest of the cardan shaft (26) made of steel.

## Revendications

1. Mécanisme de traction pour véhicules automobiles, en particulier pour des voitures particulières, comportant un groupe moteur à l'avant, au moins un différentiel entraînant les roues arrière et un arbre de transmission tubulaire disposé entre le groupe moteur et le différentiel et fait d'un matériau composite renforcé par des fibres, caractérisé en ce que, dans un segment défini de l'arbre de transmission (24), il est prévu une charge explosive (40, 42) qui est activée lors de l'apparition d'une force axiale $F_a$ définie et qui entraîne, sans une plus grande déformation plastique préalable, une destruction de l'arbre de transmission (24).

2. Mécanisme de traction selon la revendication 1, caractérisé en ce que, dans le cas d'une voiture particulière avec une protection passive des occupants, en particulier un sac gonflable, la charge explosive (40, 42) est activée en même temps que le sac gonflable.

3. Mécanisme de traction pour véhicules automobiles, en particulier pour des voitures particulières, comportant un groupe moteur à l'avant, au moins un différentiel entraînant les roues arrière et un arbre de transmission tubulaire disposé entre le groupe moteur et le différentiel et fait d'un matériau composite renforcé par des fibres, caractérisé en ce que des fibres (52), résistantes à la traction, de l'arbre de transmission (24') sont utilisées dans une matrice en résine synthétique selon un angle d'enroulement a défini, et en ce que l'arbre de transmission (24′), en ce qui concerne son diamètre intérieur $d_i$, l'épaisseur de paroi s, l'angle d'enroulement $\alpha$ et le matériau, est dimensionné sur le plan constructif de telle manière que le rapport

$$\frac{Md_T \text{ théorique}_{\text{rupture statique}}}{F_a \text{ théorique}_{\text{rupture dynamique}}} = 10 \text{ à } 12,5$$

soit obtenu, $Md_T$ théorique étant le moment de torsion maximal statiquement transmissible de l'arbre de transmission et $F_a$ théorique rupture dynamique étant la force dirigée axialement en quelques millisecondes, pour laquelle l'arbre de transmission (24′) casse ou est détruit.

4. Mécanisme de traction selon la revendication 3, caractérisé en ce que l'arbre de transmission (24′) est fabriqué en fibres de carbone (52) incorporées dans une résine époxy.

5. Mécanisme de traction selon les revendications 3 et 4, caractérisé en ce que l'angle d'enroulement $\alpha$ est de $\pm$ 10° à 30°, et en particulier de 15° à 20°.

6. Mécanisme de traction selon l'une quelconque des revendications 3 à 5, caractérisé en ce que le rapport $d_i/s$, pour un diamètre intérieur d'environ 70 mm, se situe entre 22 et 32.

7. Mécanisme de traction selon l'une quelconque ou plusieurs des revendications précédentes, caractérisé en ce que seul un segment (24) de l'arbre de transmission (18) est fabriqué en matériau composite renforcé par des fibres et est relié au reste de l'arbre de transmission (26) en acier, de manière rigide ou articulée.

Fig. 1

7

Fig. 2

Fig. 3